(19) **Europäisches Patentamt / European Patent Office / Office européen des brevets**

(11) **EP 4 586 494 A1**

(12) **EUROPEAN PATENT APPLICATION**
published in accordance with Art. 153(4) EPC

(43) Date of publication:
16.07.2025 Bulletin 2025/29

(21) Application number: 23862998.4

(22) Date of filing: 28.08.2023

(51) International Patent Classification (IPC):
$H02P\ 27/024^{(2016.01)}$ $\quad H02P\ 25/024^{(2016.01)}$
$H02P\ 27/06^{(2006.01)}$

(52) Cooperative Patent Classification (CPC):
H02P 25/024; H02P 27/024; H02P 27/06

(86) International application number:
PCT/JP2023/031003

(87) International publication number:
WO 2024/053459 (14.03.2024 Gazette 2024/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 08.09.2022 JP 2022143326
20.06.2023 JP 2023100662

(71) Applicant: DENSO CORPORATION
Kariya-city, Aichi 448-8661 (JP)

(72) Inventor: SEGUCHI, Masahiro
Kariya-city, Aichi 448-8661 (JP)

(74) Representative: Kuhnen & Wacker
Patent- und Rechtsanwaltsbüro PartG mbB
Prinz-Ludwig-Straße 40A
85354 Freising (DE)

(54) **CONTROL DEVICE FOR ROTARY ELECTRIC MACHINE, AND PROGRAM**

(57) A wound-field rotating electric machine (40) includes: a stator (50) including a stator winding (52); and a rotor (60) having magnetic poles aligned in a circumferential direction and a field winding (70) provided for each of the magnetic poles. A controller (30) includes a control unit and an acquisition unit. The control unit controls a stator current through the stator winding and a field current through the field winding. The acquisition unit acquires a rotation parameter that indicates a rotation state of the rotor. When the rotor is in a high-rotation state in which a rotation speed of the rotor is higher than a predetermined rotation speed, the control unit controls the field current to be larger than in a state not being the high-rotation state, and controls the phase of the stator current to a field-weakening phase that weakens a field flux of the field winding.

FIG. 1

EP 4 586 494 A1

# Description

## CROSS REFERENCE TO RELATED APPLICATION

This application is based on Japanese Patent Application No. 2022-143326 filed on September 8, 2022, and Japanese Patent Application No. 2023-100662 filed on June 20, 2023, the disclosures of which are incorporated herein by reference.

## TECHNICAL FIELD

The disclosure in this specification relates to a controller and a program for a rotating electric machine.

## BACKGROUND ART

Conventionally, for example, as described in Patent Literature 1, a wound-field type rotating electric machine having a stator including stator windings and a rotor including field windings is known. In this rotating electric machine, the current flowing through the stator windings and the field current flowing through the field windings are controlled to regulate the machine's torque to the commanded torque.

## PRIOR ART LITERATURE

### PATENT LITERATURE

Patent Literature 1: JP 2018-102111 A

## SUMMARY OF INVENTION

It is known that in a permanent magnet embedded type rotating electric machine (IPM motor), field-weakening control is performed in the high-rotation range. This aims to increase the reluctance torque by reducing the flux linkage to the stator windings (reducing the back electromotive force).

On the other hand, it is conceivable to perform field-weakening in a wound-field type rotating electric machine as described above. In this case, it is desirable to construct an optimal configuration for varying the field amount using the field windings.

This disclosure has been made in view of the above circumstances, and aims to provide a controller and a program for a rotating electric machine that can achieve a reduction in the required voltage and an improvement in output.

A controller according to the present disclosure is adapted to a system including a rotating electric machine being a wound-field rotating electric machine having a stator and a rotor. The stator has a stator winding, and the rotor has a field winding provided for each of magnetic poles aligned in a circumferential direction. The controller includes a control unit and an acquisition unit. The controller controls a stator current and a field current, the stator current flowing through the stator winding. The field current flows through the field winding. The acquisition unit acquires a rotation parameter that indicates a rotation state of the rotor. The control unit is controls a magnitude of the field current and a phase of the stator current based on the rotation parameter. On a condition that the rotor is in a high-rotation state in which a rotation speed of the rotor is higher than a predetermined rotation speed, the control unit controls the field current to be larger than in a state in which the rotor is not in the high-rotation state, and controls the phase of the stator current to a field-weakening phase that weakens a field flux of the field winding.

In the above configuration, when the rotor is in a predetermined high-rotation state, control is performed to increase the field current compared to when the rotor is not in the high-rotation state, and the phase of the stator current is controlled to a field-weakening phase that weakens the magnetic flux of the field windings. In this case, by increasing the field current, it is possible to enlarge the field magnetic flux while reducing the inductance of the rotor's magnetic pole center (d-axis). Additionally, by controlling the stator current in a field-weakening phase, the interlinking magnetic flux interlinked with the stator windings is reduced. As a result, it becomes possible to reduce the drive voltage applied to the stator windings while increasing the output torque of the rotating electric machine. As a result, it is possible to achieve a reduction in the required voltage for the rotating electric machine and an improvement in output.

## BRIEF DESCRIPTION OF DRAWINGS

The above and other objects, features and advantages of the present disclosure will become more apparent from the following detailed description made with reference to the accompanying drawings. In the drawings:

FIG. 1 shows the overall structure of a control system for a rotating electric machine;
FIG. 2 shows an inverter and its peripheral components;
FIG. 3 shows the cross-sectional view of a rotor and a stator;
FIG. 4 shows an electrical circuit provided in the rotor;
FIG. 5 is a functional block diagram of torque control;
FIG. 6 shows the transition of fundamental and harmonic currents;
FIG. 7 shows the magnetic flux generated between the stator and rotor in the weakened field condition;
FIG. 8 shows the relationship between a field current and a phase of a stator current when field-weakening is performed, with respect to the output torque;
FIG. 9 shows the relationship between the field current and a required voltage;
FIG. 10 shows the relationship between a current phase and a torque;

FIG. 11 is a time chart showing the transitions of U-phase current, U-phase voltage, output torque, and field current;

FIG. 12 is a time chart showing the transitions of U-phase current, U-phase voltage, output torque, and field current;

FIG. 13 is a time chart showing the transitions of a fundamental current and a harmonic current for one phase, along with the transition of a harmonic superimposed current;

FIG. 14 explains current control for each operating state of the rotating electrical machine;

FIG. 15 is a flowchart showing a current control process;

FIG. 16 is a flowchart showing the procedure for increasing the field flux when in a high-rotation, high-load state; and

FIG. 17 shows the relationship between a rotor rotational speed and the field current, as well as the relationship between the rotor rotational speed and a stator current phase.

DETAILED DESCRIPTION OF EMBODIMENTS

An embodiment of a controller according to the present disclosure will be described below with reference to the drawings. The controller constitutes a control system for the rotating electrical machine, and the control system is installed in a vehicle. The rotating electric machine is the driving power source of the vehicle.

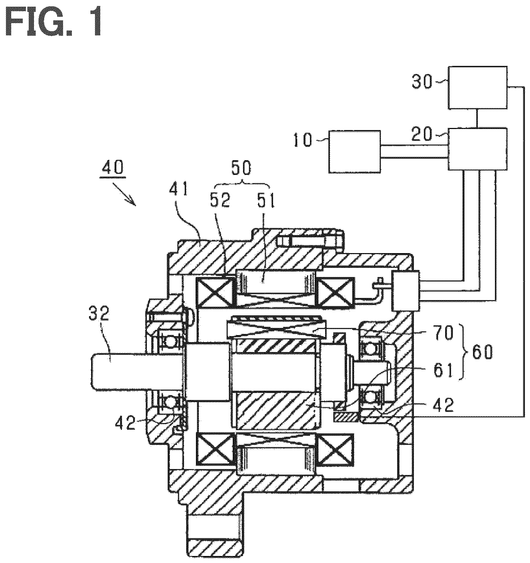

As shown in FIG. 1, the control system includes a DC power supply 10, an inverter 20, a controller 30, and a rotating electric machine 40. The rotating electric machine 40 is a wound-field synchronous machine. For example, an integrated electromechanical drive system may be configured with the rotating electric machine 40, the inverter 20, and the controller 30, or each of the rotating electric machine 40, the inverter 20, and the controller 30 may be configured as individual components.

The rotating electric motor 40 has a housing 41, a stator 50 and a rotor 60 that are housed in the housing 41. In this embodiment, the rotating electric machine 40 is an inner rotor type rotating electric machine in which the rotor 60 is positioned radially inside the stator 50.

The stator 50 includes a stator core 51 and stator windings 52. The stator windings 52 are made of, for example, copper wire, and include U, V, and W phase windings 52U, 52V, and 52W, which are arranged to be offset by 120 degrees in terms of electrical degrees from each other.

The rotor 60 includes a rotor core 61 and field windings 70. The field windings 70 are formed, for example, by compression molding. As a result, the space factor is improved, and the assemblability of the field windings 70 is enhanced. The field windings 70 may be made of, for example, aluminum wire. Aluminum wire has a low specific gravity, which can reduce the centrifugal force when the rotor 60 rotates. Aluminum wire has lower strength and hardness compared to copper wire, making it suitable for compression molding. Additionally, the field windings 70 are not limited to aluminum wire and may be made of, for example, copper wire or CNT (carbon nanotubes). Furthermore, the field windings do not necessarily have to be compression molded.

The rotating shaft 32 is inserted through the central hole of the rotor core 61. The rotating shaft 32 is rotatably supported by the housing 41 via a bearing 42

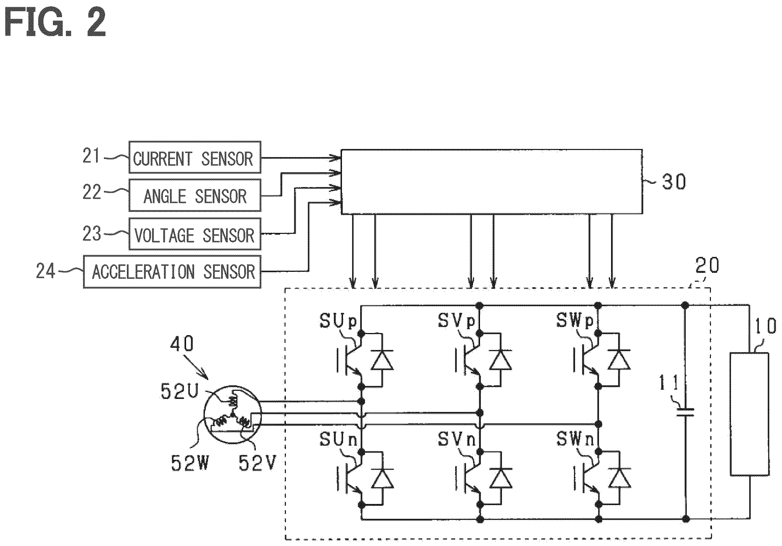

As shown in FIG. 2, the inverter 20 includes series connections of U, V, W phase upper arm switches SUp, SVp, SWp and U, V, W phase lower arm switches SUn, SVn, SWn. The connection points between the U, V, W phase upper arm switches SUp, SVp, SWp and the U, V, W phase lower arm switches SUn, SVn, SWn are connected to the first ends of the U, V, W phase windings 52U, 52V, 52W. The second ends of the U, V, W phase windings 52U, 52V, 52W are connected at a neutral point. That is, in this embodiment, the U, V, W phase windings 52U, 52V, 52W are star-connected. In this embodiment, each of the switches SUp to SWn is an IGBT. A freewheeling diode is connected in reverse parallel to each of the switches SUp to SWn.

The positive terminal of the DC power supply 10 is connected to the collectors of the U, V, W phase upper arm switches SUp, SVp, SWp. The negative terminal of the DC power supply 10 is connected to the emitters of the U, V, W phase lower arm switches SUn, SVn, SWn. A smoothing capacitor 11 is connected in parallel to the DC power supply 10.

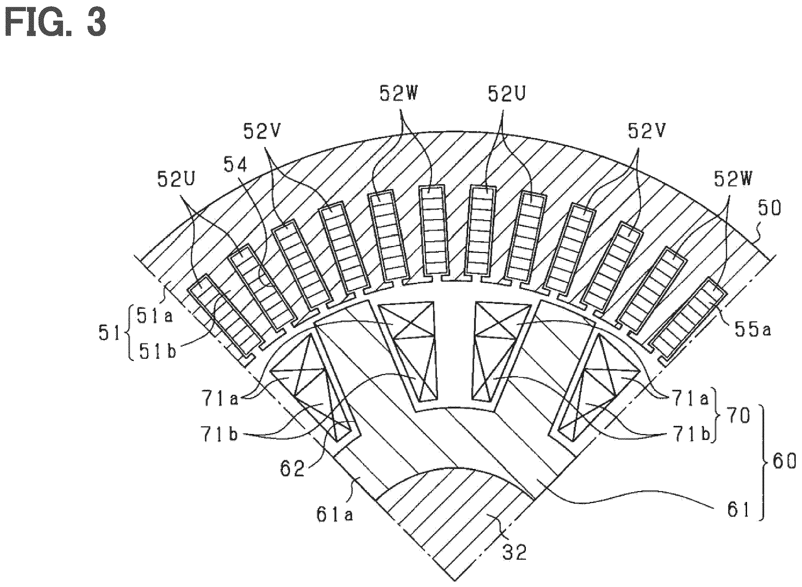

Next, the stator 50 and the rotor 60 will be explained with reference to FIG. 3.

Both the stator 50 and the rotor 60 are arranged coaxially with the rotating shaft 32. In the following description, the direction in which the rotating shaft 32 extends is referred to as the axial direction, the direction extending radially from the center of the rotating shaft 32 is referred to as the radial direction, and the direction extending circumferentially around the rotating shaft 32 is referred to as the circumferential direction.

The stator core 51 is composed of laminated steel plates made of soft magnetic material and has an annular back yoke 51a and multiple teeth 51b protruding radially inward from the back yoke 51a. Multiple slots 54 arranged in the circumferential direction are formed between the adjacent teeth 51b. The stator winding 52 is formed by accommodating the phase windings of each phase in the respective slots 54 in a predetermined order. For example, it is possible to adopt a segmented coil structure using multiple conductor segments in the stator 50. However, the structure of the stator winding 52 is optional.

The rotor core 61 is made of a soft magnetic material, for example, composed of laminated steel plates. The rotor core 61 has a cylindrical portion 61a and multiple main pole portions 62 protruding radially outward from the cylindrical portion 61a. In this embodiment, eight main pole portions 62 are provided at equal intervals in the circumferential direction.

The field winding 70 includes a first winding portion 71a and a second winding portion 71b. In each main pole portion 62, the first winding portion 71a is wound on the radially outer side, and the second winding portion 71b is wound on the radially inner side relative to the first winding portion 71a. In each main pole portion 62, the winding directions of the first winding portion 71a and the second winding portion 71b are the same. Additionally, among the main pole portions 62 adjacent in the circumferential direction, the winding directions of each winding portion 71a and 71b wound on one are opposite to the winding directions of each winding portion 71a and 71b wound on the other. For this reason, the magnetization directions of the main pole portions 62 adjacent in the circumferential direction become opposite to each other. In the rotor 60, multiple magnetic poles (field poles) arranged in the circumferential direction are formed by each main pole portion 62 of the rotor core 61 and the field winding 70 wound around each main pole portion 62.

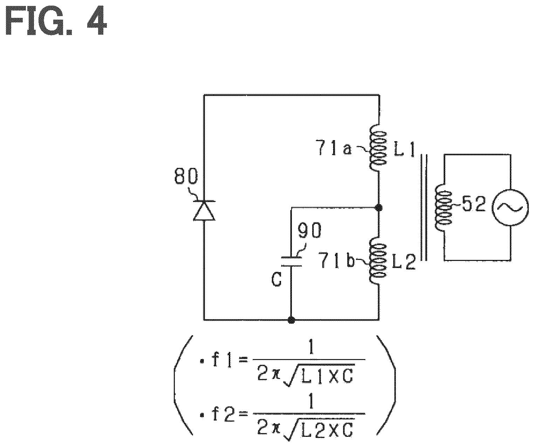

FIG. 4 shows the electrical circuit on the rotor 60 side, which includes each winding portion 71a and 71b wound around the main pole portion 62. The first winding portion 71a and the second winding portion 71b are connected in series, and a diode 80, functioning as a rectifying element, is connected across both ends of the series connection of these winding portions 71a and 71b. In other words, the cathode of the diode 80 is connected to the first end of the first winding portion 71a, and the second end of the first winding portion 71a is connected to the first end of the second winding portion 71b. The anode of the diode 80 is connected to the second end of the second winding portion 71b. A capacitor 90 is connected in parallel with the second winding portion 71b. Instead of the second winding portion 71b, the capacitor 90 may be connected in parallel with the first winding portion 71a. In FIG. 4, L1 represents the inductance of the first winding portion 71a, L2 represents the inductance of the second winding portion 71b, and C represents the capacitance of the capacitor 90.

In this embodiment, a series resonance circuit including the first winding portion 71a, the capacitor 90, and the diode 80 is formed, and a parallel resonance circuit comprising the second winding portion 71b and the capacitor 90 is formed. The resonance frequency of the series resonance circuit is referred to as the first resonance frequency f1, and the resonance frequency of the parallel resonance circuit is referred to as the second resonance frequency f2. Each resonance frequency, f1 and f2, is expressed by the following equations (eq1) and (eq2).

(Mathematical Equation 1)

$$f1 = \frac{1}{2\pi\sqrt{L1 \cdot C}} \quad \cdots \quad (eq1)$$

(Mathematical Equation 2)

$$f2 = \frac{1}{2\pi\sqrt{L2 \cdot C}} \quad \cdots \quad (eq2)$$

Returning to the description of FIG. 2, the control system includes a current sensor 21, an angle sensor 22, a voltage sensor 23, and an accelerator sensor 24. The current sensor 21 detects the current of at least two phases among the phase currents flowing through the rotating electric machine 40. The angle sensor 22 detects the rotational angle (electrical angle) of the rotor 60. The voltage sensor 23 includes a sensor that detects the voltage of the DC power supply 10 and a sensor that detects the back electromotive force of each phase winding 52U to 52W. The accelerator sensor 24 detects the amount of operation of the accelerator operation member (specifically, the accelerator pedal) operated by the driver of the vehicle. The detected values from each of the sensors 21 to 24 are provided to the controller 30.

The controller 30 generates drive signals to turn on and off each switch SUp to SWn that constitute the inverter 20. Specifically, the controller 30 generates drive signals to turn on and off the arm switches SUp to SWn in order to convert the DC power output from the DC power supply 10 into AC power and supply it to the U, V, and W phase windings 52U, 52V, and 52W, and supplies the generated drive signals to the gates of respective arm switches SUp to SWn.

The controller 30 turns each switch SUp to SWn on and off so that a composite current of fundamental current and harmonic current flows through each phase winding 52U, 52V, and 52W. The fundamental current is primarily the current that generates torque in the rotating electric machine 40. The harmonic current is primarily the current that excites the field winding 70. The phase currents flowing through each phase winding 52U, 52V, and 52W are shifted by 120 electrical degrees.

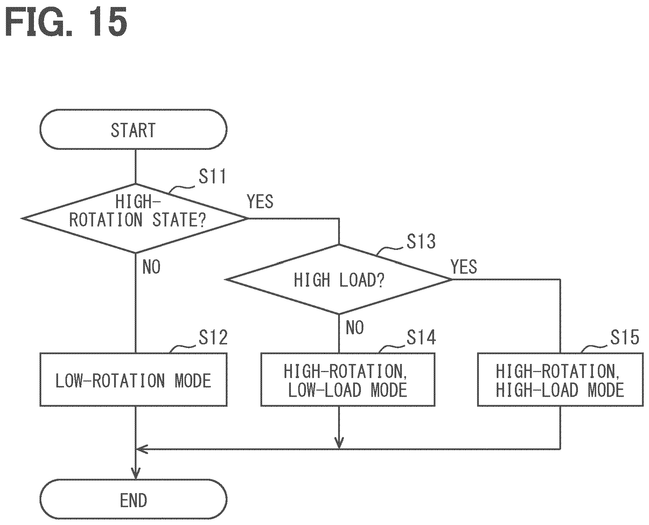

The controller 30 is mainly composed of a microcontroller (equivalent to a computer), and the microcontroller is equipped with a CPU. Means and/or functions provided by the microcomputer may be provided by software recorded in a substantive memory device and a computer that can execute the software, software only, hardware only, or some combination of them. For instance, suppose that the microcomputer be provided by including or using a hardware circuit serving as an electronic circuit. Such an electronic circuit may be provided by including analog circuitry and/or digital circuitry including multiple logic circuits. For example, the microcomputer executes a program stored in a non-transitory tangible storage medium serving as a storage unit included therein. The program includes, for example, a program of processing shown in FIG. 15 and the like described later. With the execution of the program, a method corresponding to the program is executed. The storage unit is, for example, a non-volatile memory. The programs stored in the memory unit can be updated, for example, over the air (OTA) or via communication networks such as the internet.

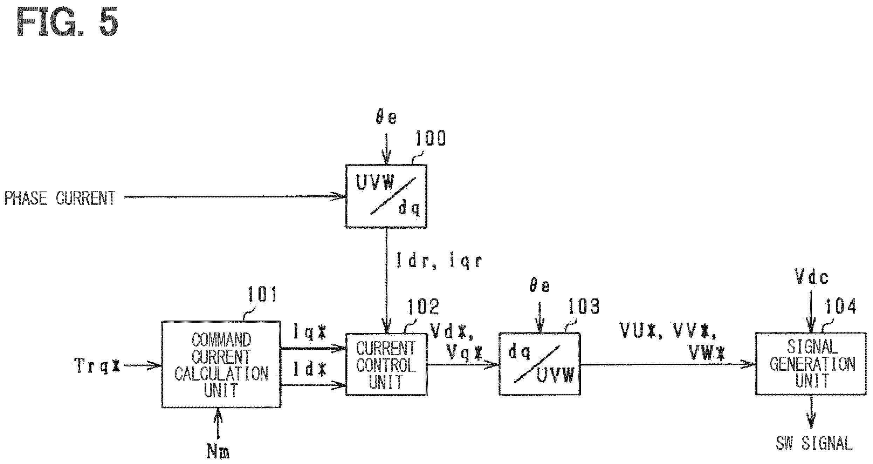

The following explains the torque control of the rotating electric machine 40 executed by the controller 30 with FIG. 5.

A two-phase conversion unit 100 converts the U, V, and W phase currents in the three-phase stationary coordinate system into the d-axis current Idr and the q-axis current Iqr in the two-phase rotating coordinate system (dq coordinate system) based on the detected values from the current sensor 21 and the electrical angle θe detected by the angle sensor 22.

A command current calculation unit 101 calculates the d-axis and q-axis command currents Id* and Iq* based on the command torque Trq*. The d-axis and q-axis command currents Id* and Iq* reflect both the fundamental current and the harmonic current that excites the field winding 70. Specifically, the command current calculation unit 101 calculates the d-axis and q-axis command currents Id* and Iq* based on the command torque Trq* and the map information that relates the command torque Trq* to the d-axis and q-axis command currents Id* and Iq*. Here, the command torque Trq* is set higher as the accelerator operation amount detected by the accelerator sensor 24 increases. The command current calculation unit 101 sets the d-axis command current Id* such that field-weakening control is executed when the rotational speed Nm of the rotor 60 increases and enters the field-weakening region. A current control unit 102 increases the d-axis command current Id* in the negative direction in the field-weakening region. It should be noted that the rotational speed Nm of the rotor 60 can be calculated based on the detection value of the angle sensor 22.

The current control unit 102 calculates the d-axis current deviation ΔId by subtracting the d-axis current Idr from the d-axis command current Id*. The current control unit 102 calculates the q-axis current deviation ΔIq by subtracting the q-axis current Iqr from the q-axis command current Iq*.

The current control unit 102 calculates the d-axis command voltage Vd* as a control input for feedback control to make the d-axis current Idr follow the d-axis command current Id*, based on the d-axis current deviation ΔId. The current control unit 102 calculates the q-axis command voltage Vq* as a control input for feedback control to make the q-axis current Iqr follow the q-axis command current Iq*, based on the q-axis current deviation ΔIq.

A three-phase conversion unit 103 converts the d-axis and q-axis command voltages Vd and Vq in the two-phase rotating coordinate system to the U, V, and W phase voltage command values VU*, VV*, and VW* in the three-phase stationary coordinate system, based on the d-axis and q-axis command voltages Vd*,Vq* and the electrical angle θe. The U, V, and W phase voltage command values VU*, VV*, and VW* form waveforms that are phase-shifted by 120 degrees from each other in terms of the electrical angle.

The frequency of the harmonic components included in the U, V, and W phase voltage command values VU*, VV*, and VW* is set to be near the first resonant frequency f1 or the second resonant frequency f2. This allows for increased excitation and reduced amplitude of harmonic currents, thereby reducing torque ripple in the rotating electric machine 40.

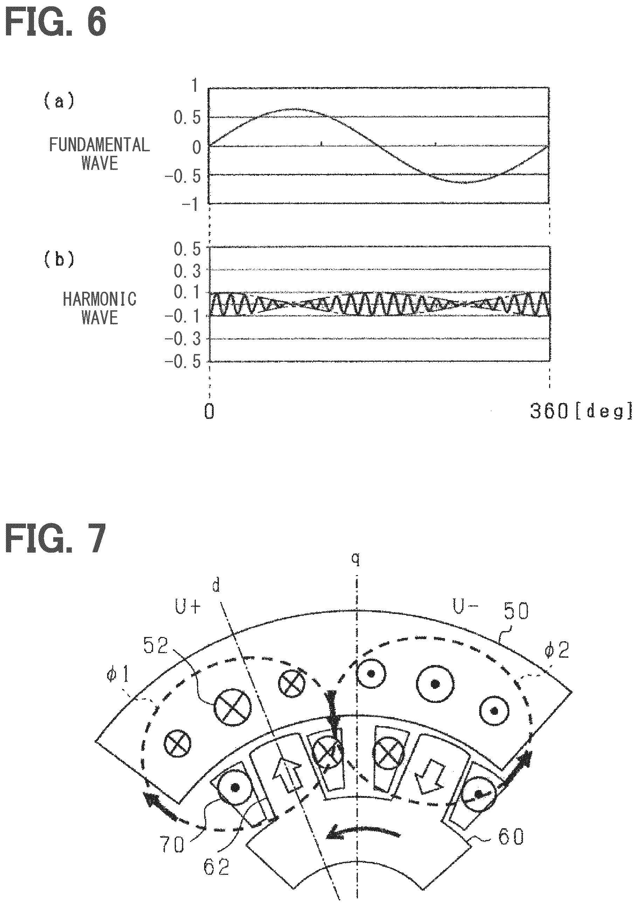

As shown in FIG. 6, the envelope of the harmonic current has a period that is half that of the fundamental current. The envelope is indicated by a one-dot chain line in FIG. 6(b). The values on the vertical axis shown in FIG. 6 indicate the relative magnitude of the waveforms depicted in FIGS. 6(a) and 6(b). The timing at which the envelope reaches its peak value is shifted from the timing at which the fundamental current reaches its peak value. Specifically, the timing at which the envelope reaches its peak value is set to be the timing when the fundamental current is at its central fluctuation point (0).

It should be noted that the timing at which the envelope of the harmonic current reaches its peak value can, for example, coincide with the timing at which the fundamental current reaches its peak value.

Returning to the description of FIG. 5, a signal generation unit 104 generates the drive signals for the upper and lower arm switches of the U, V, and W phases by means of three-phase modulation based on the U, V, and W phase voltage command values VU*, VV*, and VW*, as well as the voltage Vdc of the DC power supply 10 detected by the voltage sensor 23. The generated drive signals are provided to the respective gates of switches. This executes the switching operation of the inverter 20.

In this embodiment, for the wound-field rotating electric machine 40, when the rotor rotational speed is in a high-rotation state higher than a predetermined rotational speed, the field current flowing through the field winding 70 is increased compared to when it is not in a high-rotation state. Additionally, the phase of the stator current flowing through the stator winding 52 is set to a field-weakening phase that weakens the field magnetic flux of the field winding 70. Here, the high-rotation state of the rotating electric machine 40 includes the state where the rotational speed reaches the range in which the drive voltage of the stator winding 52 enters the saturation region, that is, the field-weakening region. The threshold for determining the high-rotation state can be, for example, a rotational speed that is 1/2 or 1/3 of the maximum rotational speed of the rotating electric machine 40. Additionally, the field-weakening phase is defined as the angle between the current vector, determined by the d-axis current Id and the q-axis current Iq, and the q-axis in the d-q coordinate system (specifically, the angle is measured counterclockwise from the q-axis as positive). For example, it may be desirable if this angle is 45 degrees or more. In this case, during the driving state, the range of the field-weakening phase is between 45 degrees and 90 degrees. Additionally, during the regenerative state, the range of the field-weakening phase is between 90 degrees and 135 degrees. It is noted that the range of the field-weakening phase can be set to values other than those mentioned above. For example, in the driving state, the lower limit of the field-weakening phase range could be 40 degrees and the upper limit could be 85 degrees, among other possible values.

FIG. 7 is a diagram showing the magnetic flux generated between the stator 50 and the rotor 60 in a field-weakening state. In FIG. 7, for example, when U-phase current flows through the U-phase windings (U+, U-), magnetic fluxes φ1 and φ2 that are opposite in direction are generated between the stator 50 and the rotor 60 due to the current flow. Additionally, the harmonic currents contained in the U-phase current induce field current in the field winding 70, and this field current generates the field magnetic flux. In FIG. 7, one main pole portion 62 of the rotor 60 (on the left side of the figure) is an N pole, and the other main pole portion 62 (on the right side of the figure) is an S pole, with the rotor 60 rotating in a counterclockwise direction.

In FIG. 7, the phase of the stator current is advanced, resulting in a field-weakening phase. In this case, while the interlinking magnetic flux interlinked with the stator winding 52 is reduced, the field magnetic flux is generated by the field current, which suppresses the reduction of the main flux torque. In the high-rotation state of the rotating electric machine 40, the energization control is performed in the state shown in FIG. 7. The following provides a detailed explanation of the control of the stator current and field current in the high-rotation state of the rotating electric machine 40.

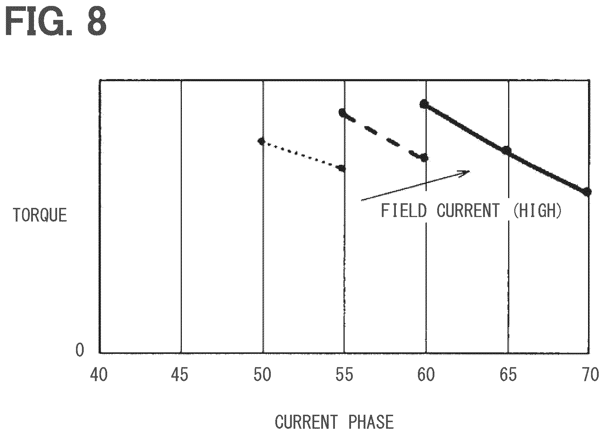

FIG. 8 illustrates the relationship between the field current and the phase of the stator current when field-weakening is performed in the high-rotation state of the rotating electric machine 40, with respect to the output torque. Here, the stator current is assumed to be constant.

As can be seen from FIG. 8, when the field current is low, the degree of field-weakening of the stator current is relatively small in terms of securing torque. However, as the field current increases, the degree of field-weakening of the stator current becomes larger in order to secure the torque. Furthermore, it can be seen that by increasing the field current and increasing the degree of field-weakening of the stator current (increasing the current phase in the figure), the output torque increases.

The following describes the issues involved in performing field-weakening magnetization at the high-rotation state.

When increasing the field current of the field winding 70, when a command to increase the field current is issued to create a state of increased field flux, the field current gradually increases after the command to increase the current is given. In this case, if the stator current phase is set to the field-weakening phase before the field current has sufficiently increased (i.e., before the field flux increases due to the excitation of the field winding 70), an increase in the drive voltage (required voltage) necessary for energizing the stator winding 52 will occur before the field current increases. For example, when increasing the field current from a state where the field current is zero, the stator current is energized at the field-weakening phase while the field current remains at zero initially. In this case, there is a concern that the rotating electric machine 40 temporarily becomes a reluctance motor. As a result, the inductance in the d-axis increases, allowing flux to flow more easily, which in turn could lead to an increase in the required voltage.

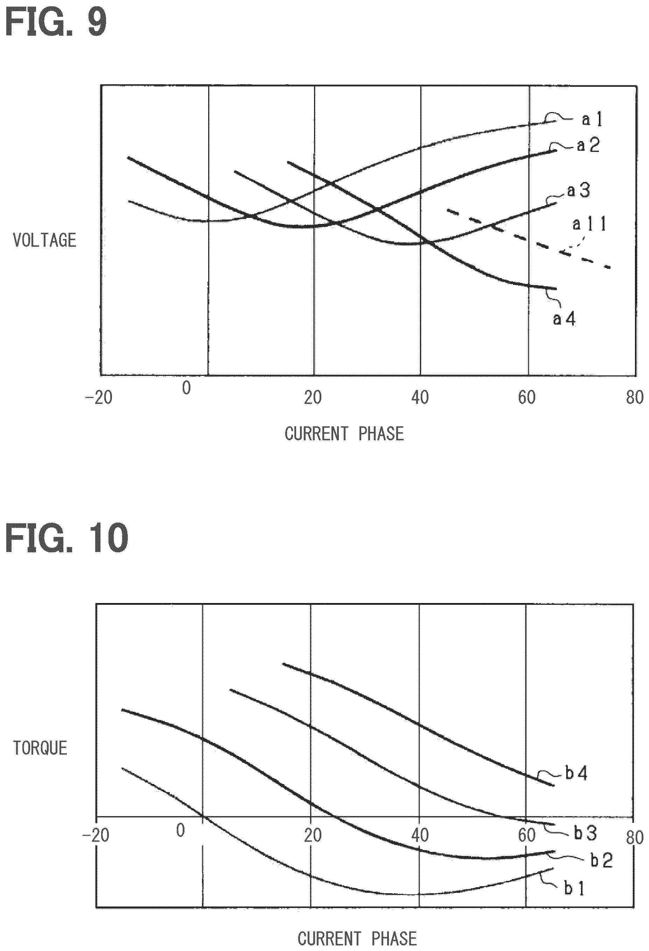

The relationship between the field current and the required voltage is explained with FIG. 9. In FIG. 9, a1 to a4 each illustrate the relationship between the current phase and voltage for different field current conditions. As examples of the field current, a1 represents 0 A, a2 represents 10 A, a3 represents 20 A, and a4 represents 30 A. a1 to a4 maintain a constant effective value of the stator current (250 Arms). Additionally, a11 sets the field current at 30 A and the effective value of the stator current at 150 Arms.

In FIG. 9, it can be observed that when performing field-weakening (for instance, when the current phase is 45° or more), the required voltage for the rotating electric machine 40 increases as the field current decreases. This trend becomes more pronounced as the degree of field-weakening increases. On the other hand, when the field current is high, setting the phase to a field-weakening condition results in a lower required voltage. This trend becomes more pronounced as the field current increases. In other words, as the field current increases, the d-axis inductance in the rotor 60 decreases, making it more difficult for the flux caused by the stator current to flow through the field poles. In this case, by setting the phase to a field-weakening condition, it becomes possible to lower the required voltage. Additionally, when comparing the same field current under field-weakening conditions, it can be observed that the required voltage is lower when the stator current is high compared to when the stator current is low.

Additionally, FIG. 10 illustrates the relationship between the current phase and torque. In FIG. 10, b1 to b4 each show the relationship between the current phase and torque for different field currents. As examples of field currents, b1 is 0 A, b2 is 10 A, b3 is 20 A, and b4 is 30 A. The effective value of the stator current is constant. According to FIG. 10, in a field-weakening condition (for example, at a phase of -60 degrees), it can be seen that the torque is higher when the field current is higher.

Therefore, in this embodiment, when increasing the field current, the field current increases in response to the command to increase the field current, and until the field flux increases, the phase of the stator current is not shifted and remains in a non-field-weakening phase. Then, after the field current has increased and the field flux has reached an increased state, the phase of the stator current is shifted to a field-weakening phase, and the stator current is also increased. For example, the state in which the field current has reached the command value (target value) in response to the command to increase the field current is considered the state of increased field flux. However, even after the command to increase the field current, the state in which the field current has risen to a predetermined value below the command value may also be considered a state of increased field flux.

In this embodiment, the field winding 70 is excited with a harmonic current (harmonic excitation). It is conceivable that, in the initial state of the harmonic excitation, the field current induced by the harmonic current is insufficient, and the field flux has not reached the desired state. In this case, if the field flux has not reached the desired state, there is a concern that the required voltage may exceed the supply voltage when the stator current is shifted to the field-weakening phase, as described above.

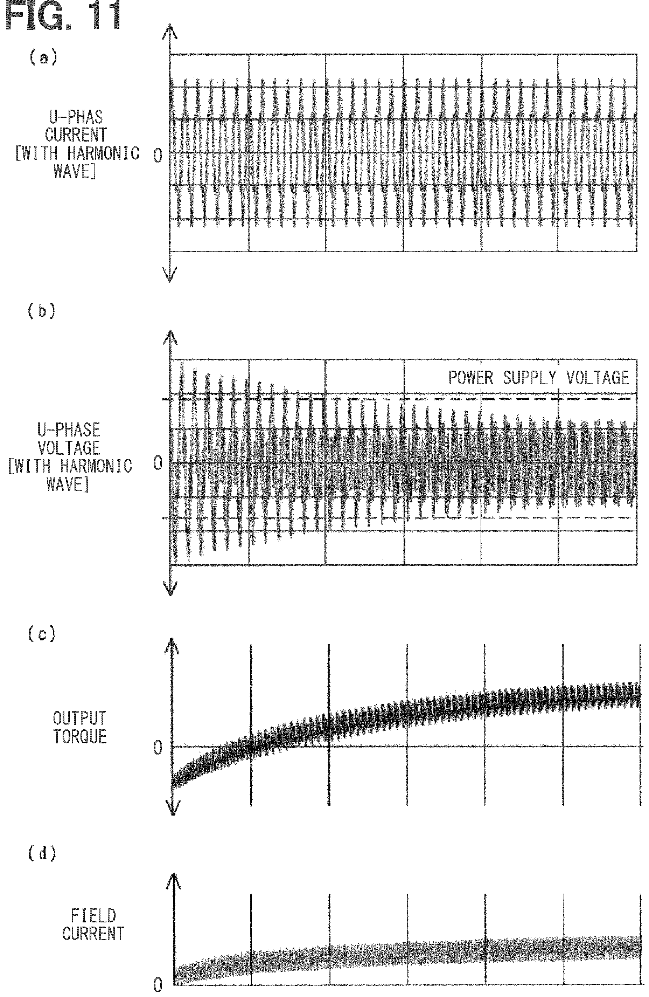

FIG. 11 is a time chart showing the transitions of one phase of stator current (U-phase current) with a predetermined harmonic current superimposed, the transition of one phase of drive voltage (U-phase voltage), the transition of output torque, and the transition of field current, in a state where the phase of the stator current (fundamental current) is shifted to the field-weakening phase. The rotor rotational speed is 9000 rpm, the effective value of the stator current is 260 Arms, and the phase of the stator current is -60 degrees.

In FIG. 11, the phase of the stator current is in the field-weakening phase from the initial state, which is immediately after the start of harmonic excitation. Additionally, with the conduction of the U-phase current, which is the superimposed harmonic current, the field current gradually increases. In this case, the drive voltage exceeds the supply voltage at the initial stage of harmonic excitation, and gradually decreases as the field current increases. Additionally, the torque gradually increases as the field current increases. However, at the initial stage of harmonic excitation, when the field current is low, the output torque becomes negative.

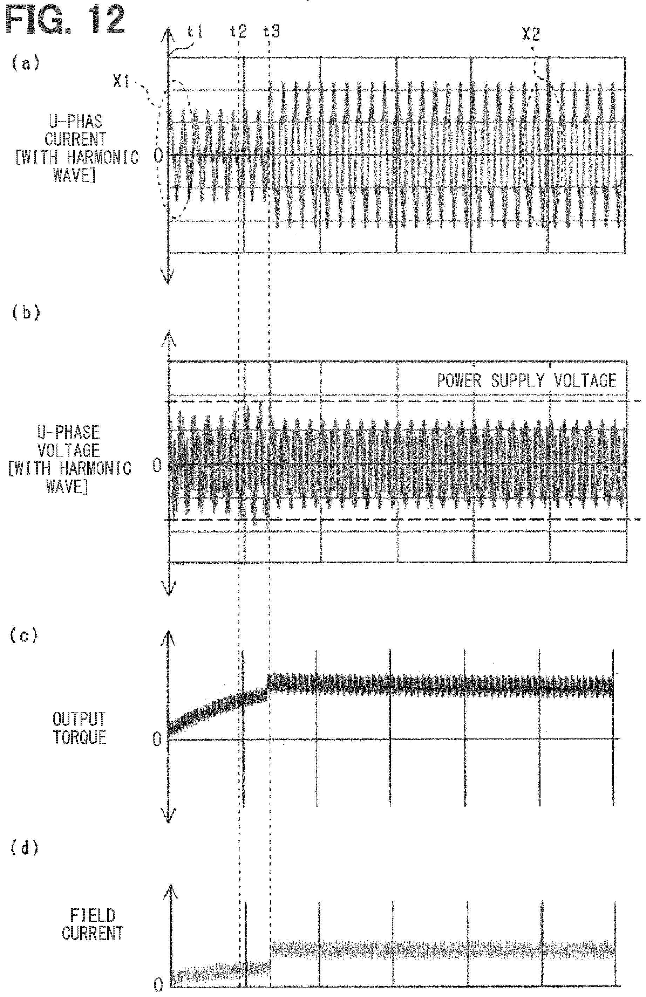

In contrast, in FIG. 12, the amplitude and phase of the stator current are made different between the initial state immediately after the start of harmonic excitation and the subsequent excitation completion state. The rotor rotation speed is 9000 rpm. In the initial state, the effective value of the stator current is 150 Arms and the stator current phase is -30 degrees. In the excitation completion state, the effective value of the stator current is 260 Arms and the stator current phase is -60 degrees.

In FIG. 12, during the initial state, the field current is still increasing and sufficient field flux has not yet been generated. Therefore, the phase of the stator current (U-phase current) is not set to the field-weakening phase (during the period from t1 to t2 in the figure). Then, at timing t2, the phase of the stator current transitions to the field-weakening phase, and at timing t3, the amplitude of the stator current is increased. In this case, after the command to increase the field current, the transition of the stator current to the field-weakening phase and the increase in the amplitude of the stator current are carried out while waiting for the field current to increase. As a result, in FIG. 12, the U-phase voltage is prevented from exceeding the power supply voltage throughout the entire period, including the initial state. Additionally, the output torque gradually increases from the initial state as the field current increases. Moreover, the timing for transitioning the stator current phase to the field-weakening phase and the timing for increasing the amplitude of the stator current can be the same.

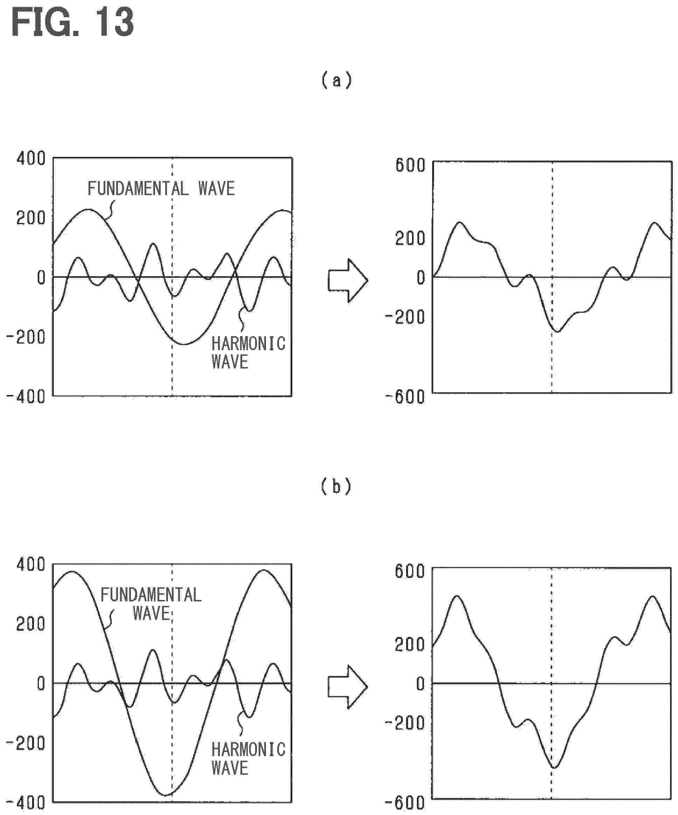

In the initial state and the fully excited state, the amplitude of the fundamental current in the stator current is different. FIG. 13(a) shows the transition of the fundamental current and harmonic current for one phase in the initial state (X1 in FIG. 12), as well as the transition of the combined current of these fundamental wave and harmonic currents (harmonic superimposed current). Additionally, FIG. 13(b) shows the transition of the fundamental current and harmonic current for one phase in the fully excited state (X2 in FIG. 12), as well as the transition of the combined current of these fundamental wave and harmonic currents (harmonic superimposed current). As shown in each of these figures, in the initial state, the amplitude of the fundamental current is set lower, while in the fully excited state, the amplitude of the fundamental current is amplified.

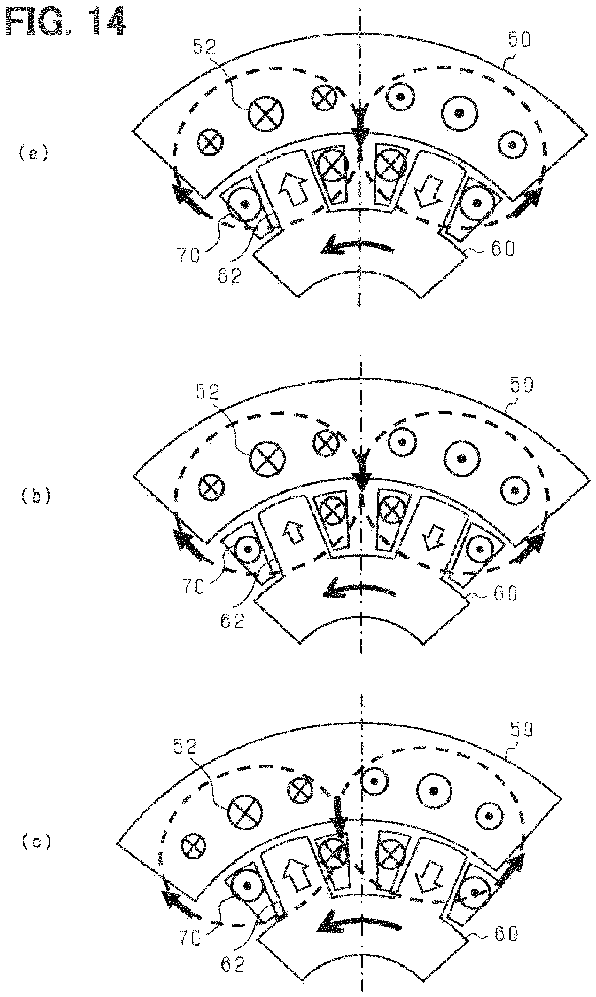

In this embodiment, the operating region of the rotating electric machine 40 is divided into a low-rotation region, a high-rotation low-load region, and a high-rotation high-load region. In each of these regions, stator current control and field current control are implemented separately. FIG. 14(a) shows the state of current control in the low-rotation region, FIG. 14(b) shows the state of current control in the high-rotation low-load region, and FIG. 14(c) shows the state of current control in the high-rotation high-load region.

In the low-rotation region shown in FIG. 14(a), the phase of the stator current (fundamental current phase) is set to a phase without field-weakening (current phase 0°) or near it. When a torque increase is required in the low-rotation state, torque is increased by increasing the stator current and field current. In the low-rotation region, the voltage drop due to back electromotive force and inductance is small, so it is possible to handle within the power supply voltage even if the field flux is increased without field-weakening. In this case, the settings for the field current and stator current should be determined based on efficiency.

In the high-rotation low-load region shown in FIG. 14(b), similar to the low-rotation region, the phase of the stator current (fundamental current phase) is set to a phase without field-weakening (current phase 0 degrees) or near it. In this state, if an attempt is made to increase torque by increasing the stator current and field current, there is a concern that the drive voltage may exceed the power supply voltage as the stator current and field current increase. Therefore, the phase of the stator current is not set to a field-weakening phase, and the field current is not increased compared to when it is not in a high-rotation state (i.e., it is kept equal to or lower than in the low-rotation state). On the other hand, the amplitude of the stator current is increased compared to when it is not in a high-rotation state. Regarding the setting of the stator current amplitude, for example, in terms of the relationship between the command value of the stator current (d-axis and q-axis command currents Id* and Iq*) relative to the commanded torque, it may be desirable to establish a relationship where, for the same commanded torque, the command value of the stator current is larger in the high-rotation state than in the low-rotation state. In this case, by lowering the field current and reducing the flux linkage, the back electromotive force is suppressed, and the drive voltage is reduced. Although a smaller flux linkage can lead to torque limitations, it becomes an effective measure in low-load regions.

In the high-rotation high-load region shown in FIG. 14(c), the phase of the stator current (fundamental current phase) is set to a field-weakening phase, and under this condition, the field current is increased. In other words, compared to when it is not in a high-rotation state, the field current is increased, and the phase of the stator current is set to a field-weakening phase. Regarding the setting of the field current, for example, it may be desirable to establish a relationship where, for the same commanded torque, the command value of the field current is larger in the high-rotation state compared to the low-rotation state. In this case, by enhancing the field flux, the d-axis inductance is reduced, which allows for an improvement in output. Therefore, this becomes an effective measure in high-load regions. Additionally, it may be desirable to increase the amplitude of the stator current compared to when it is not in a high-rotation state. In addition, when performing field-weakening, it may be desirable to make adjustments so that the relationship between the current phase and the torque, as shown in FIG. 8, is taken into account, thereby preventing a significant reduction in the main flux torque.

FIG. 15 is a flowchart illustrating the current control process in this embodiment. This process is executed at a predetermined cycle by the controller 30.

In FIG. 15, step S11 determines whether the rotor 60 is in a predetermined high-rotation state. Specifically, it determines whether the rotor rotational speed is higher than a predetermined rotational speed (for example, 6000 rpm). At this time, it may be desirable to obtain the rotor rotational speed calculated based on the detection value of the angle sensor 22 as a rotational parameter indicating the rotational state of the rotor 60 (acquisition unit), and to determine whether the rotor 60 is in a high-rotation state based on that rotor rotational speed. If the rotor 60 is not in a high-rotation state, the process proceeds to step S12. If the rotor 60 is in a high-rotation state, the process proceeds to step S13. In step S12, the rotating electric machine 40 is controlled in a low-rotation rotation mode. That is, the stator current phase is not set to a field-weakening phase, and the stator current and field current are controlled based on the commanded torque.

Additionally, in step S13, it is determined whether the commanded torque of the rotating electric machine 40 is in a high-load state, which is greater than a predetermined value (torque determination unit). If it is determined in step S13 that the high-load state is not present (i.e., in a high-rotation low-load state), the process proceeds to step S14. If it is determined in step S13 that the high-load state is present (i.e., in a high-rotation high-load state), the process proceeds to step S15.

In step S14, the rotating electric machine 40 is controlled in a high-rotation low-load mode. That is, the stator current phase is not set to a field-weakening phase, and the field current is not increased compared to when it is not in a high-rotation state (i.e., the field current is kept equal to or less than that in the low-rotation state). Meanwhile, the amplitude of the stator current is increased compared to when it is not in a high-rotation state. In step S15, the rotating electric machine 40 is controlled in a high-rotation high-load mode. That is, the field current is increased compared to when it is not in a high-rotation state, and the phase of the stator current is set to a field-weakening phase. Additionally, the amplitude of the stator current is increased compared to when it is not in a high-rotation state.

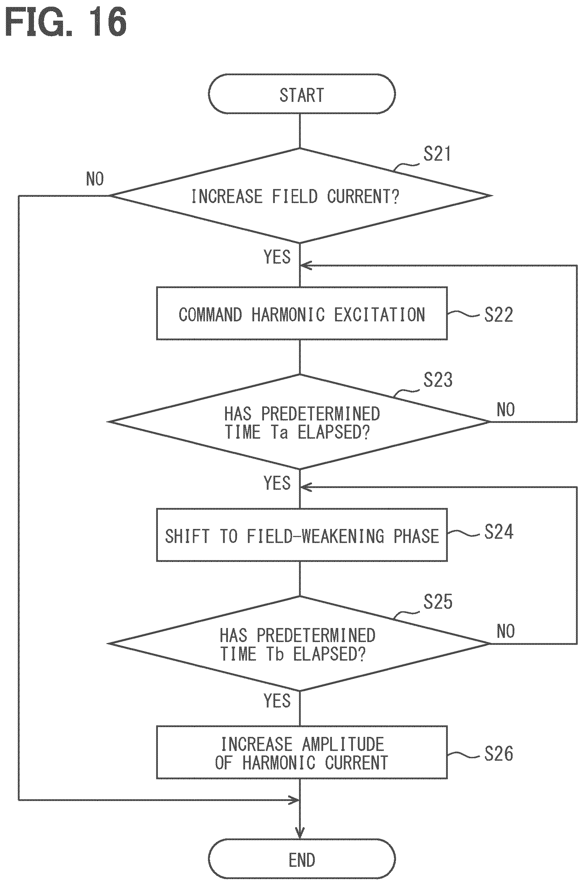

FIG. 16 is a flowchart illustrating the processing procedure for increasing the field flux in a high-rotation high-load state. This process is executed, for example, in step S15 of FIG. 15.

In FIG. 16, in step S21, it is determined whether the situation is one in which the field flux should be increased. Under vehicle driving conditions, for example, step S21 is affirmed in a situation where an acceleration operation is performed from the high-rotation state of the rotating electric machine 40, and the commanded torque is increased. In other words, step S21 is affirmed when the rotating electric machine 40 transitions from a high-rotation low-load state to a high-rotation high-load state. If step S21 is affirmed, the process proceeds to step S22.

In step S22, the initiation of harmonic excitation is commanded in order to increase the field current. Specifically, the amplitude of the harmonic current included in the stator current is increased. At this time, the initiation of harmonic excitation is commanded while the phase of the stator current is not in the field-weakening phase. In the subsequent step S23, it is determined whether a predetermined time Ta has elapsed since the command to increase the field current was initiated. If step S23 is affirmed, the process proceeds to the subsequent step S24.

In step S24, the phase of the stator current is set to the field-weakening phase. In the subsequent step S25, it is determined whether a predetermined time Tb (where Tb > Ta) has elapsed since the command to increase the field current was initiated. If step S25 is affirmed, the process proceeds to the subsequent step S26. In step S26, the amplitude of the fundamental current is amplified. It should be noted that in the process shown in FIG. 16, it is also possible to omit the processing of step S25, and execute both the weakening of the field phase of the stator current (step S24) and the amplification of the amplitude of the fundamental current (step S26) at the time point when the predetermined time Ta has elapsed since the command to increase the field current was initiated.

According to the present embodiment described in detail above, the following excellent effects can be obtained.

When the rotor 60 is in a predetermined high-rotation state, the system is configured to perform control that increases the field current compared to when it is not in a high-rotation state, and control that sets the phase of the stator current to a field-weakening phase that weakens the field flux of the field winding 70. In this case, by increasing the field current, it is possible to reduce the d-axis inductance of the rotor 60 while simultaneously increasing the field flux. Additionally, by controlling the stator current to a field-weakening phase, the flux linkage that interlinks with the stator winding 52 is reduced. As a result, it becomes possible to reduce the drive voltage applied to the stator winding 52 while increasing the output torque of the rotating electric machine 40. As a result, it is possible to achieve both a reduction in the required voltage for the rotating electric machine 40 and an improvement in its output.

When the rotor 60 is in a predetermined high-rotation state, the system is configured to perform control that increases the field current, sets the phase of the stator current to a field-weakening phase, and additionally increases the amplitude of the stator current compared to when it is not in a high-rotation state. As a result, the effects of reducing the drive voltage applied to the stator winding 52 and increasing the torque of the rotating electric machine 40 can be further enhanced.

When an increase in the field current is commanded to achieve a state of increased field flux, the field current gradually increases after the command for the current increase is issued. In this case, if the phase of the stator current is set to a field-weakening phase before the field current has sufficiently increased (i.e., before the increase in field flux due to the excitation of the field winding 70), an increase in the drive voltage of the stator winding 52 will occur before the field current has increased. In this regard, by setting the phase of the stator current to a field-weakening phase after the state of increased field flux has been achieved following the command to increase the field current, it is possible to suitably realize the reduction in the drive voltage applied to the stator winding 52 and the effect of increasing the torque of the rotating electric machine 40 during the period, including immediately after the increase command for the field current.

After commanding an increase in the field current, if the phase of the stator current is set to a field-weakening phase or the stator current is increased before the field current has sufficiently increased (i.e., before the increase in field flux due to the excitation of the field winding 70), an increase in the drive voltage of the stator winding 52 will occur before the field current has increased. In this regard, by setting the phase of the stator current to a field-weakening phase and increasing the stator current after the state of increased field flux has been achieved following the command to increase the field current, it is possible to suitably realize the reduction in the drive voltage applied to the stator winding 52 and the effect of increasing the torque of the rotating electric machine 40 during the period, including immediately after the increase command for the field current.

In a configuration where harmonic currents included in the stator current induce field current in the field winding 70, the combination of the field current and the field-weakening phase of the stator current can achieve an improvement in the output of the rotating electric machine 40. In this case, particularly, by switching the harmonic current to a command value corresponding to the increase in field flux and then setting the phase of the stator current to a field-weakening phase after achieving a state of increased field flux due to the induced field current from the switching, it is possible to suitably realize the reduction in the drive voltage applied to the stator winding 52 and the effect of increasing the torque of the rotating electric machine 40 during the period, including immediately after the command for the harmonic current.

In the high-rotation state, the required level of output torque differs between high-load and low-load states. By controlling the stator current and field current while taking this aspect into consideration, appropriate current control can be achieved according to the operating state of the rotating electric machine 40.

(Other Embodiments)

The above embodiments may be modified as follows, for example.

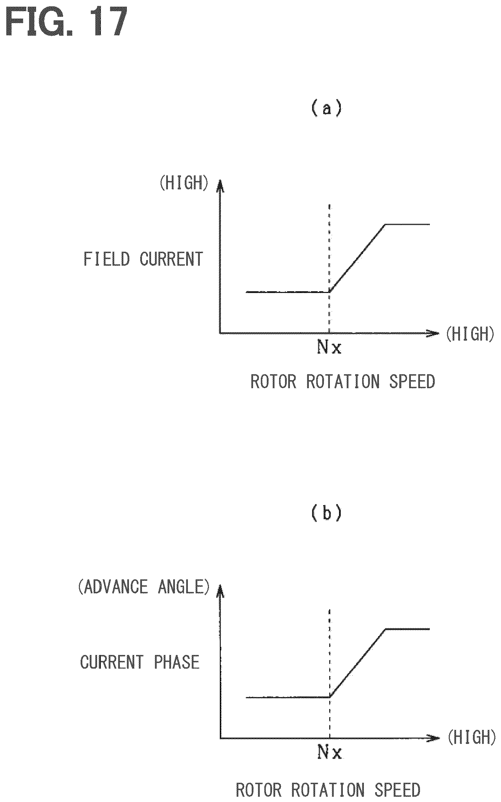

The controller 30 may increase the field current and advance the phase of the stator current when the rotor 60 is in a high-rotation state, particularly when the rotor rotational speed is relatively higher compared to when the rotor rotational speed is relatively lower. Specifically, the controller 30 may increase the field current based on the relationship shown in FIG. 17(a) when the rotor 60 is in a high-rotation state and the field current is increased by the harmonic currents included in the phase currents of each phase (for example, at step S22 in FIG. 16). In FIG. 17(a), it is defined that in a rotational state where the rotor rotational speed is less than a predetermined value Nx, the field current is set to a predetermined value (lower limit) regardless of the rotor rotational speed. On the other hand, in a high-rotation state where the rotor rotational speed is Nx or higher, the field current increases as the rotor rotational speed increases.

Additionally, the controller 30 may advance the phase of the stator current based on the relationship shown in FIG. 17(b) when the rotor 60 is in a high-rotation state and the phase of the stator current is set to a field-weakening phase (for example, at step S24 in FIG. 16). In FIG. 17(b), it is defined that in a rotational state where the rotor rotational speed is less than a predetermined value Nx, the phase of the stator current is set to a predetermined value (maximum lag angle) regardless of the rotor rotational speed. Conversely, in a high-rotation state where the rotor rotational speed is Nx or higher, the phase of the stator current advances as the rotor rotational speed increases.

Furthermore, in FIGS. 17(a) and (b), the field current and the stator current phase can be defined in multiple stages according to the rotor rotational speed when the rotor 60 is in a high-rotation state.

The controller 30 may determine the rotational state of the rotor 60 based on the drive voltage of the stator winding 52, using the correlation between the drive voltage applied to the stator winding 52 and the rotor rotational speed. In a rotating electric machine, the drive voltage of the stator winding 52 increases as the rotor rotational speed increases. In this case, the drive voltage of the stator windings 52 corresponds to a "rotation parameter."

Additionally, the controller 30 may calculate the rotor rotational speed based on the voltage command value of the stator winding 52, and determine the rotational state of the rotor 60 based on that rotor rotational speed. In this case, the rotor rotational speed calculated based on the voltage command value of the stator winding 52 corresponds to the "rotational parameter."

In the above embodiment, as shown in FIG. 15, the rotational state of the rotor 60 is determined to be high-rotation rotation or not by comparing the rotor rotational speed with a predetermined rotational speed (for example, 6000 rpm) (step S11). If the rotor 60 is in a high-rotation state, the field current is increased, and the phase of the stator current is controlled to a field-weakening phase compared to when the rotor 60 is not in a high-rotation state. However, this configuration may be modified. Specifically, instead of determining the rotational state of the rotor by comparing the rotor rotational speed with a predetermined rotational speed, the relationship shown in FIGS. 17(a) and 17(b) can be used. In this case, if the rotor 60 is in a high-rotation state, the field current can be increased, and the phase of the stator current can be controlled to a field-weakening phase compared to when the rotor 60 is not in a high-rotation state.

In the above embodiment, the command current calculation unit 101 in FIG. 5 is configured to calculate the d-axis and q-axis command currents such that they reflect both the fundamental current and the harmonic current. However, this configuration may be modified. For example, based on the command torque, the d-axis and q-axis command currents can be calculated as values that reflect the fundamental current. From these d-axis and q-axis command currents, the fundamental wave voltage command values for the U, V, and W phases can be calculated (by the command current calculation unit 101, the current control unit 102, and the three-phase conversion unit 103). At the same time, for the harmonic current set according to the command torque, the harmonic voltage command values for the U, V, and W phases can be calculated. And then, by adding the fundamental wave voltage command values and the harmonic voltage command values for the U, V, and W phases, the voltage command values for the U, V, and W phases are calculated. The inverter 20 is then subjected to switching control based on these voltage command values for each phase.

The capacitor 90, which is included in the resonant circuit, may be connected in parallel with the first winding portion 71a instead of the second winding portion 71b. Additionally, in the resonant circuit, the anode of the diode 80 can be connected to the first winding portion 71a side of the series connection of the first and second winding portions 71a and 71b, while the cathode of the diode 80 can be connected to the second winding portion 71b side.

In the rotor 60, the second winding portion 71b may be positioned closer to the stator 50 in the radial direction than the first winding portion 71a.

The rotating electric machine is not limited to an inner rotor type; it can also be an outer rotor type rotating electric machine. In this case, the main pole portion protrudes radially inward from the rotor core.

The rotating electric machine is not limited to a star-connected configuration; it can also be a delta-connected rotating electric machine.

The stator core may be a stator core without teeth.

The configuration for supplying field current to the field winding is not limited to the circuit shown in FIG. 4. For example, it may include a brush electrically connected to the field winding and a power source electrically connected to the brush. In this case, the controller 30 controls the field current flowing through the field winding by increasing the output voltage of the power source electrically connected to the brush when the rotor 60 is in a high-rotation state. It should be noted that when a brush is used, it is not necessary to pass harmonic current through the stator winding to induce the field current.

The rotating electric machine is not limited to those used as vehicle main engines; for example, it may also be a rotating electric machine used as an ISG (Integrated Starter Generator) that functions both as a motor and a generator.

A mobile object on which the control system is mounted is not limited to a vehicle, and may be, for example, an aircraft or a ship. Furthermore, the control system is not limited to a system mounted on a mobile object; it may also be a stationary system.

The controller and the technique according to the present disclosure may be achieved by a dedicated computer provided by constituting a processor and a memory programmed to execute one or more functions embodied by a computer program. Alternatively, the controller and the method described in the present disclosure may be implemented by a special purpose computer configured as a processor with one or more special purpose hardware logic circuits. Alternatively, the controller and the method described in the present disclosure may be implemented by one or more special purpose computer, which is configured as a combination of a processor and a memory, which are programmed to perform one or more functions, and a processor which is configured with one or more hardware logic circuits. The computer program may be stored in a computer-readable non-transitory tangible recording medium as an instruction executed by a computer.

The technical ideas extracted from the above embodiments are described below.

(Configuration 1)

A controller (30) is adapted to a system including a rotating electric machine (40) being a wound-field rotating electric machine having a stator (50) and a rotor (60). The stator (50) has a stator winding (52), and the rotor has a field winding (70) provided for each of magnetic poles aligned in a circumferential direction. The controller includes a control unit and an acquisition unit. The controller controls a stator current and a field current, the stator current flowing through the stator winding. The field current flows through the field winding. The acquisition unit acquires a rotation parameter that indicates a rotation state of the rotor. The control unit is controls a magnitude of the field current and a phase of the stator current based on the rotation parameter. On a condition that the rotor is in a high-rotation state in which a rotation speed of the rotor is higher than a predetermined rotation speed, the control unit controls the field current to be larger than in a state in which the rotor is not in the high-rotation state, and controls the phase of the stator current to a field-weakening phase that weakens a field flux of the field winding.

(Configuration 2)

In the controller according to the Configuration 1, on a condition that the rotor is in the high-rotation state, the control unit is configured to increase the field current and advance the phase of the stator current in a situation where the rotor has a higher rotation speed compared to a situation where the rotor has a lower rotation speed.

(Configuration 3)

In the controller according to the Configuration 1 or 2, on a condition that the rotor is in the high-rotation state, the control unit controls the field current to be larger than in the state in which the rotor is not in the high-rotation state, controls the phase of the stator current to the field-weakening phase that weakens the field flux of the field winding, and controls an amplitude of the stator current to be larger than in the state in which the rotor is not in the high-rotation state.

(Configuration 4)

In the controller according to any one of the Configurations 1 to 3, on a condition that the control unit controls the field current to be increased under the high-rotation state, the control unit is configured to set the phase of the stator current to the field-weakening phase after the field current has entered an increased state in response to a command to increase the field current.

(Configuration 5)

In the controller according to any one of the Configurations 1 to 3, on a condition that the control unit controls the field current to be increased under the high-rotation state, the control unit is configured to set the phase of the stator current to the field-weakening phase and increase an amplitude of the stator current after the field flux has entered an increased state in response to a command to increase the field current.

(Configuration 6)

In the controller according to any one of the Configurations 1 to 5, the system includes an inverter (20) electrically connected to the stator winding. The rotor includes: a rotor core (61); and a main pole portion (62) provided for each of the magnetic poles and protruding from the rotor core in a radial direction. The field winding includes a series connector in which a first winding portion (71a) and a second winding portion (71b) are connected in series. Each of the first winding portion and the second winding portion is wound around the main pole portion. A rectifying element (80) is connected between both ends of the series connector. A capacitor (90) is connected in parallel to either the first winding portion or the second winding portion. The control unit executes a switching operation of the inverter to: control a fundamental current, which corresponds to a command torque of the rotating electric machine, to flow through the stator winding, the fundamental current corresponding to; and control a harmonic current to flow through the stator winding, the harmonic current causing the field current to be induced at the field winding, the harmonic current having a shorter cycle than the fundamental current. On a condition that the rotor is in the high-rotation state, the control unit executes changing of the harmonic current to a command value corresponding to an increase in the field flux, and sets the phase of the stator current to the field-weakening phase, after the field flux has entered an increased state by induction of the field current in response to the changing.

(Configuration 7)

The controller according to one of the Configurations 1 to 6 further includes a determination unit configured to determine whether a command torque of the rotating electric machine is larger than a predetermined value. On a condition that the rotor is in the high-rotation state and that the determination unit determines that the rotating electric machine is in a high-load state in which the command torque is larger than the predetermined value, the control unit controls the field current to be larger than in the state in which the rotor is not in the high-rotation state, and sets the phase of the stator current to the field-weakening phase. On a condition that that the rotor is in the high-rotation state and that the determination unit determines that the rotating electric machine is in a low-load state in which the command torque is smaller than the predetermined value, the control unit does not set the phase of the field current to the field-weakening phase; the controller unit does not control the field current to be larger than in the state where the rotor is not in the high-rotation state; and the controller controls an amplitude of the stator current to be larger than in a state in which the rotor is not in the high-rotation state.

Although having been described in accordance with examples, the present disclosure should not be limited to the examples and structures. The present disclosure encompasses various modifications and variations within the scope of equivalents. In addition, while the various elements are shown in various combinations and configurations, which are exemplary, other combinations and configurations, including more, less or only a single element, are also within the spirit and scope of the present disclosure.

**Claims**

1. A controller (30) for a rotating electric machine (40), the controller configured to be adapted to a system including the rotating electric machine being a wound-field rotating electric machine having a stator (50) and a rotor (60), the stator (50) having a stator winding (52), the rotor having a field winding (70) provided for each of magnetic poles aligned in a circumferential direction, the controller comprising:

   a control unit configured to control a stator current and a field current, the stator current flowing through the stator winding, the field current flowing through the field winding; and
   an acquisition unit configured to acquire a rotation parameter that indicates a rotation state of the rotor, wherein
the control unit is configured to control a magnitude of the field current and a phase of the stator current based on the rotation parameter, and on a condition that the rotor is in a high-rotation state in which a rotation speed of the rotor is higher than a predetermined rotation speed, the control unit is configured to:

   control the field current to be larger than the field current in a state in which the rotor is not in the high-rotation state; and
   control the phase of the stator current to a field-weakening phase that weakens a field flux of the field winding.

2. The controller according to Claim 1, wherein on a condition that the rotor is in the high-rotation state, the control unit is configured to increase the field current and advance the phase of the stator current in a situation where the rotation speed is relatively high compared to a situation where the rotation speed is relatively low.

3. The controller according to Claim 1 or 2, wherein on a condition that the rotor is in the high-rotation state, the control unit is configured to:

   control the field current to be larger than in the state in which the rotor is not in the high-rotation state;
   control the phase of the stator current to the field-weakening phase that weakens the field flux of the field winding; and
   control an amplitude of the stator current to be larger than in the state in which the rotor is not in the high-rotation state.

4. The controller according to Claim 1 or 2, wherein

   the control unit is configured to control the field current to be increased to generate the field flux to be in a flux increased state in response to a command to increase the field current under the high-rotation state, and
   the control unit is configured to set the phase of the stator current to the field-weakening phase based on the field flux having entered the flux increased state.

5. The controller according to Claim 1 or 2, wherein

   the control unit is configured to control the field current to be increased to generate the field flux to be in a flux increased state in response to a command to increase the field current under the high-rotation state, and
   the control unit is configured to set the phase of the stator current to the field-weakening phase and increase an amplitude of the stator current, based on the field flux having entered the flux increased state.

6. The controller according to Claim 1 or 2, wherein

the system includes an inverter (20) electrically connected to the stator winding,
the rotor includes:

a rotor core (61); and
a main pole portion (62) provided for each of the magnetic poles and protruding from the rotor core in a radial direction,

the field winding includes a series connector in which a first winding portion (71a) and a second winding portion (71b) are connected in series, each of the first winding portion and the second winding portion is wound around the main pole portion,
a rectifying element (80) is connected between both ends of the series connector,
a capacitor (90) is connected in parallel to either the first winding portion or the second winding portion,
the control unit is configured to execute a switching operation of the inverter to:

control a fundamental current to flow through the stator winding, the fundamental current corresponding to a command torque of the rotating electric machine; and
control a harmonic current to flow through the stator winding, the harmonic current causing the field current to be induced at the field winding, the harmonic current having a shorter cycle than the fundamental current, and

on a condition that the rotor is in the high-rotation state, the control unit is configured to:

execute changing of the harmonic current to a command value corresponding to an increase in the field flux; and
set the phase of the stator current to the field-weakening phase, based on the field flux having entered a flux increased state by induction of the field current caused by the changing.

7. The controller according to Claim 1 or 2, further comprising:

a determination unit configured to determine whether a command torque of the rotating electric machine is larger than a predetermined value, wherein

on a condition that the rotor is in the high-rotation state and that the determination unit determines that the rotating electric machine is in a high-load state in which the command torque is larger than the predetermined value, the control unit is configured to:

control the field current to be larger than in the state in which the rotor is not in the high-rotation state; and
set the phase of the stator current to the field-weakening phase, and on a condition that that the rotor is in the high-rotation state and that the determination unit determines that the rotating electric machine is in a low-load state in which the command torque is smaller than the predetermined value, the control unit is configured:

not to set the phase of the field current to the field-weakening phase;
not to control the field current to be larger than in the state where the rotor is not in the high-rotation state; and
to control an amplitude of the stator current to be larger than in a state in which the rotor is not in the high-rotation state.

8. A program configured to be adapted to a system including a rotating electric machine (40) being a wound-field rotating electric machine having a stator (50) and a rotor (60), the stator (50) having a stator winding (52), the rotor having a field winding (70) provided for each of magnetic poles aligned in a circumferential direction, the program configured to be executed by a computer to perform:

control processing that controls a stator current and a field current, the stator current flowing through the stator winding, the field current flowing through the field winding; and
acquisition processing that acquires a rotation parameter indicating a rotation state of the rotor, wherein
the control processing controls a magnitude of the field current and a phase of the stator current based on the rotation parameter, and
on a condition that the rotor is in a high-rotation state in which a rotation speed of the rotor is higher than a predetermined rotation speed, the control processing

controls the field current to be larger than the field current in a state in which the rotor is not in the high-rotation state, and

**EP 4 586 494 A1**

controls the phase of the stator current to a field-weakening phase that weakens a field flux of the field winding.

# FIG. 1

FIG. 2

EP 4 586 494 A1

FIG. 3

EP 4 586 494 A1

# FIG. 4

$$\left( \begin{array}{l} \cdot f1 = \dfrac{1}{2\pi\sqrt{L1 \times C}} \\[2ex] \cdot f2 = \dfrac{1}{2\pi\sqrt{L2 \times C}} \end{array} \right)$$

# FIG. 5

EP 4 586 494 A1

## FIG. 6

(a)

FUNDAMENTAL
WAVE

(b)

HARMONIC
WAVE

0                                360 [deg]

## FIG. 7

# FIG. 8

# FIG. 9

VOLTAGE

a1
a2
a3
a11
a4

CURRENT PHASE

-20    0    20    40    60    80

# FIG. 10

TORQUE

b4
b3
b2
b1

-20    0    20    40    60    80

CURRENT PHASE

# FIG. 11

(a)

U-PHAS
CURRENT
[WITH HARMONIC
WAVE]

(b)

U-PHASE
VOLTAGE
[WITH HARMONIC
WAVE]

POWER SUPPLY VOLTAGE

(c)

OUTPUT
TORQUE

(d)

FIELD
CURRENT

23

# FIG. 12

(a)

U-PHAS
CURRENT
[WITH HARMONIC
WAVE]

(b)

U-PHASE
VOLTAGE
[WITH HARMONIC
WAVE]

POWER SUPPLY VOLTAGE

(c)

OUTPUT
TORQUE

(d)

FIELD
CURRENT

# FIG. 13

(a)

(b)

# FIG. 14

(a)

(b)

(c)

# FIG. 15

```
          ┌──────────────┐
          │    START     │
          └──────┬───────┘
                 │        S11
            ╱────┴────╲
          ╱    HIGH-    ╲  YES
        ╱ ROTATION STATE? ╲──────────────┐
          ╲              ╱                │
            ╲────┬────╱                   │ S13
                 │ NO                ╱────┴────╲
                 │                 ╱            ╲  YES
                 │           ╱  HIGH LOAD?        ╲──────────────┐
                 │             ╲                ╱                │
                 │               ╲────┬────╱                     │
         S12     │                    │ NO      S14              │        S15
  ┌──────────────┴──┐         ┌───────┴────────┐        ┌────────┴────────┐
  │ LOW-ROTATION MODE│        │ HIGH-ROTATION, │        │ HIGH-ROTATION,  │
  │                  │        │ LOW-LOAD MODE  │        │ HIGH-LOAD MODE  │
  └──────────────┬──┘         └───────┬────────┘        └────────┬────────┘
                 │                    │                           │
                 │◄───────────────────┴───────────────────────────┘
                 ▼
          ┌──────────────┐
          │     END      │
          └──────────────┘
```

# FIG. 16

```
        ┌─────────────────┐
        │      START      │
        └─────────────────┘
                 │
                 ▼
         ╱─────────────────╲        S21
   NO   ╱  INCREASE FIELD    ╲
◄──────┤     CURRENT?         │
        ╲                   ╱
         ╲─────────────────╱
                 │ YES
                 ▼
        ┌─────────────────────────┐
        │ COMMAND HARMONIC        │   S22
        │ EXCITATION              │
        └─────────────────────────┘
                 │
                 ▼
         ╱─────────────────╲        S23
        ╱ HAS PREDETERMINED ╲    NO
        │ TIME Ta ELAPSED?   ├──────►
        ╲                   ╱
         ╲─────────────────╱
                 │ YES
                 ▼
        ┌─────────────────────────┐
        │ SHIFT TO FIELD-         │   S24
        │ WEAKENING PHASE         │
        └─────────────────────────┘
                 │
                 ▼
         ╱─────────────────╲        S25
        ╱ HAS PREDETERMINED ╲    NO
        │ TIME Tb ELAPSED?   ├──────►
        ╲                   ╱
         ╲─────────────────╱
                 │ YES
                 ▼
        ┌─────────────────────────┐
        │ INCREASE AMPLITUDE      │   S26
        │ OF HARMONIC CURRENT     │
        └─────────────────────────┘
                 │
                 ▼
        ┌─────────────────┐
        │       END       │
        └─────────────────┘
```

# FIG. 17

(a)

(HIGH) FIELD CURRENT

Nx — ROTOR ROTATION SPEED (HIGH)

(b)

(ADVANCE ANGLE) CURRENT PHASE

Nx — ROTOR ROTATION SPEED (HIGH)

**EP 4 586 494 A1**

## INTERNATIONAL SEARCH REPORT

| International application No. |
|---|
| **PCT/JP2023/031003** |

| A. | CLASSIFICATION OF SUBJECT MATTER |
|---|---|

*H02P 27/024*(2016.01)i; *H02P 25/024*(2016.01)i; *H02P 27/06*(2006.01)i
FI:  H02P27/024; H02P25/024; H02P27/06

According to International Patent Classification (IPC) or to both national classification and IPC

| B. | FIELDS SEARCHED |
|---|---|

Minimum documentation searched (classification system followed by classification symbols)

   H02P27/024; H02P25/024; H02P27/06

Documentation searched other than minimum documentation to the extent that such documents are included in the fields searched

   Published examined utility model applications of Japan 1922-1996
   Published unexamined utility model applications of Japan 1971-2023
   Registered utility model specifications of Japan 1996-2023
   Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2002-142488 A (MITSUBISHI ELECTRIC CORP.) 17 May 2002 (2002-05-17) paragraphs [0035]-[0079], fig. 1-5 | 1-2, 4, 6, 8 |
| A | | 3, 5, 7 |
| Y | JP 55-46889 A (MITSUBISHI ELECTRIC CORP.) 02 April 1980 (1980-04-02) p. 2, lower left column, line 16 to p. 3, upper right column, line 4, fig. 1, 5 | 1-2, 4, 6, 8 |
| Y | JP 2018-102111 A (DENSO CORP.) 28 June 2018 (2018-06-28) paragraphs [0028]-[0046], fig. 1-6 | 6 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 September 2023** | **10 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

30

INTERNATIONAL SEARCH REPORT
Information on patent family members

International application No.

PCT/JP2023/031003

| Patent document cited in search report | | | Publication date (day/month/year) | Patent family member(s) | | | Publication date (day/month/year) |
|---|---|---|---|---|---|---|---|
| JP | 2002-142488 | A | 17 May 2002 | US 2002/0084773 A1 paragraphs [0045]-[0081], fig. 1-5 | | | |
| JP | 55-46889 | A | 02 April 1980 | (Family: none) | | | |
| JP | 2018-102111 | A | 28 June 2018 | US 2019/0312539 A1 paragraphs [0054]-[0072], fig. 1-6 | | | |
| | | | | EP 3562009 A1 | | | |
| | | | | CN 110089013 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022143326 A
- JP 2023100662 A
- JP 2018102111 A